# EUROPEAN PATENT SPECIFICATION

(11) **EP 3 010 337 B1**
(45) Date of publication and mention of the grant of the patent: **12.05.2021**
(21) Application number: 14814504.8
(22) Date of filing: 16.06.2014
(51) Int. Cl.: A01N 25/06, A01N 43/36, A01N 25/30, A01N 37/02, A23B 7/16, A23B 7/144, A23B 7/154, A01N 37/46, A01N 43/653, A01N 43/78, A01N 43/54

(54) **COMPOSITIONS AND METHODS FOR POST-HARVEST TREATMENT**
ZUSAMMENSETZUNGEN UND VERFAHREN ZUR BEHANDLUNG NACH DER ERNTE
COMPOSITIONS ET PROCÉDÉS POUR UN TRAITEMENT APRÈS RÉCOLTE

(30) Priority: 18.06.2013 US 201361836583 P
(43) Date of publication of application: 27.04.2016
(73) Proprietor: Syngenta Participations AG, 4058 Basel (CH)
(72) Inventor: RAMALINGAM, Nagarajan, Greensboro, NC 27409 (US); ROSS, David, Charles, Greensboro, NC 27409 (US); COTTLE, Matthew, Robert, Greensboro, NC 27409 (US); OSHIGE, Eric, Stephen, Greensboro, NC 27409 (US); OXBY, Gabriel, Ian, Greensboro, NC 27409 (US)
(74) Representative: HGF
(86) International application number: PCT/US2014/042451
(87) International publication number: WO 2014/204822

(56) References cited:
- EP-A1- 0 669 078
- WO-A1-2011/124586
- WO-A1-2012/032262
- WO-A1-2013/011108
- WO-A1-2013/050663
- CN-A- 101 492 589
- CN-A- 102 703 189
- US-A- 4 382 077
- US-A- 4 857 345
- US-A- 5 154 018
- US-A1- 2005 043 182
- US-A1- 2008 261 811
- US-A1- 2010 298 139
- US-A1- 2011 034 496
- US-A1- 2011 111 245
- US-B2- 8 173 681
- US-B2- 8 252 719
- Anonymous: "eFOG -80 FDL - Postharvest", , 1 January 2012 (2012-01-01), pages 1-2, XP55310548, Retrieved from the Internet: URL:https://www.paceint.com/wp-content/upl oads/2016/02/eFOG-80-FDL-Spec-Label-11.6.1 2EPA.pdf [retrieved on 2016-10-13]
- Anonymous: "XEDATHANE-A", Fiche Produit No.051, 7 July 2011 (2011-07-07), XP55310592, Retrieved from the Internet: URL:http://www.xeda.com/en/XEDATHANE-A.pdf [retrieved on 2016-10-13]
- Anonymous: "Vectors - Vectors nuisances and their control", , 27 September 2005 (2005-09-27), pages 1-32, XP55310715, Retrieved from the Internet: URL:http://www.pulsfog.de/sources/applicat ions/vector control/pulsFOG vector, nuisances and their control.pdf [retrieved on 2016-10-14]
- THE DOW CHEMICAL COMPANY: 'Dow P-Series Glycol Ethers ''.' July 2002, page 1, XP055261542 Retrieved from the Internet: <URL:http://msdssearch.dow.com/PublishedLit eratureDOWCOM/dh_012d/0901 b8038012d976.pdf? filepath=oxysolvents/pdfs/noreg/110-00977.p df&fromPage=GetDoc> [retrieved on 2014-08-27]
- VECTORFOG: 'What is ULV?' 12 December 2012, XP055328497 Retrieved from the Internet: <URL:https://web.archive.org/web/2012121207 3142/ http://www.vectorfog.com/what-is-ulv> [retrieved on 2014-08-27]
- B Schaffer ET AL: "The avocado: botany, production and uses", South African Avocado Growers' Asociation Yearbook 1999 The avocado: botany, production and uses, vol. 22 1 December 1999 (1999-12-01), pages 88-90, XP055428382, Wallingford, UK DOI: 10.1079/9781845937010.0000 ISBN: 978-1-84593-701-0 Retrieved from the Internet: URL:http://www.avocadosource.com/Journals/ SAAGA/SAAGA_1999/SAAGA_1999_PG_088-090.pdf

## Description

The present disclosure relates generally to treatment of harvested crops, and more particularly to compositions and methods for treating post-harvested crops.

Applicants consider crop loss, e.g. in the supply chain, to be a serious problem around the world. As a result, applicants desire, inter alia, improved compositions and methods for post-harvest treatments to reduce crop loss. By way of example, applicants desire compositions and methods that provide any number of benefits including at least one of improved disease control, increased storage life, improved application uniformity, improved application safety and reduced phytotoxicity.

Further, applicants desire compositions that are suitable for thermal fogging applications, and even more particularly, compositions that are ready-to-fog (RTF) for application by thermal fogging. Existing fogging techniques, by way of contrast, often require combining an active ingredient (ai) into a carrier such as propylene glycol or diphenylamine, usually with the addition of a heating step (e.g. to 82-88°C (180-190° F)) to dissolve the ai. Other traditional fogging typically uses diesel, crop oils, isopropanol, methanol, etc.

While generally effective, applicants believe existing technologies have the potential to suffer from any number of problems including: handling, storage and shipping of the ai in what is basically a technical form; operator error around accurately measuring the ai; insuring uniform mixing of the ai within the carrier; and the requirement for procuring and maintaining additional equipment to heat, pump and inject slurries to be fogged to the thermal fogger.

Various embodiments may address any number of these, or additional, problems.

US 4 382 077A discloses fungicide containing formulations for thermal fogging which contain a solvent system made of 60% diethylene glycol, 10% methanol, and 30% methylene chloride. However, compositions containing propylene glycol methyl ether and oleic acid are not disclosed.

WO 2012/032262 A1 discloses a composition comprising 20% eugenol (as clove oil) and 75% dipropylene glycol for treating harvested apples and pears by thermal fogging. However, compositions containing propylene glycol ethyl ether and oleic acid are not disclosed.

WO 2013/050663A1 describes a pyrimethanil formulation comprising 249% of a mixture of mono and dipropylene glycol. However, compositions containing propylene glycol methyl ether and oleic acid are not disclosed.

US 2005/043182 discloses compositions comprising trifloxystrobin or trifloxystrobin plus propiconazole, glycol etyher solvents and a filler. However, compositions containing propylene glycol methyl ether and oleic acid are not disclosed.

Anonymous "EFOG - 80FDL - Postharvest" (Jan 1, 2012, pages 1-2, XP55310584, Retrieved from the Internet: URL:http://www.paceint.com/wp-content/uploads/2016/02/eFOG-80-FDL-Spec-Label-11.6.12EPA.pdf discloses a fludioxinil composition for the post- harvest treatment of fruit by thermal fogging. However, compositions containing propylene glycol methyl ether and oleic acid are not disclosed.

Anonymous:XEDATHANE-A" Fiche Produit No. 051, July 7, 2011, XP55310592, Retrieved from the Internet: URL:http://www.xeda.com/en/XEDATHANE-A.pdf discloses Xedathane-A for the post-harvest treatment of fruit by thermal fogging which comprises pyrimethanil. The solvents/wetting agents are not disclosed.

Anonymous: "Vectors-Vectors nuisances and their control", 27 September 2005, pages 1-32, XP55310715, Retrieved from the Internet: URL:http://www.pulsfog.de/sources/applications/vector control/pulsFOG vector, nuisances and their control.pdf. explains that glycols may replace combustible oils in thermal fogging formulations, maintaining their advantageous droplet size distribution and visible fogging. However, compositions containing propylene glycol methyl ether and oleic acid are not disclosed.

US 4 857 345 A discloses compositions for the post-harvest treatment of fruit by thermal fogging having low phytotoxicity. However, compositions containing propylene glycol methyl ether and oleic acid are not disclosed.

B Schaffer et al. (The avocado: botany, production and uses", South African Growers Association Yearbook 1999; Vol 22, p 88-90, XP055428382 discloses fungicidal compositions for use in the thermal fogging of avocado. However, compositions containing propylene glycol methyl ether are not disclosed.

US 2011/111245A1 discloses a wood treatment composition containing a mixture of fungicides and oleic acid. However, compositions containing propylene glycol methyl ether are not disclosed.

According to the present invention there is provided a composition for the post-harvest treatment of crops, the composition comprising:
1% to 20%, by weight percent, of at least one fungicidally-active compound, wherein the at least one fungicidally active compound includes at least one compound chosen from fludioxonil, mefenoxam, metalaxyl, difenoconazole, propiconazole, thiabendazole, and azoxystrobin;
30% to 80%, by weight percent, of at least one glycol ether solvent wherein the at least one ether solvent includes propylene glycol methyl ether; and
5% to 30%, by weight percent, of at least one filler which is oleic acid.

In some examples, the fungicidally active compound includes at least one of fludioxonil, mefenoxam, difenoconazole, propiconazole, and azoxystrobin. Further, in some embodiments, compositions will comprise less than 1%, by weight percent, of aqueous carrier, e.g. water.

In another embodiment, the method of the invention includes applying composition, as described above, to a harvested fruit or vegetable. In many examples, the application will include fogging the composition. Further, in many examples, the composition will be configured as a ready-to-fog (RTF) compositions for fogging applications.

Generally, the present disclosure provides compositions and methods of using and making a composition for post-harvest treatment.

The term fungicidally-active compound as utilized herein includes compounds active against phytopathogenic fungi. The composition includes at least one compound chosen from fludioxonil, mefenoxam, metalaxyl, difenoconazole, propiconazole, thiabendazole, and azoxystrobin and may further include compounds in any number of classes, for example, triazole derivatives, strobilurins, carbamates (including thio- and dithiocarbamates), benzimidazoles (thiabendazole), N-trihalomethylthio compounds (captan), substituted benzenes, carboxamides, phenylamides, phenylpyrroles, and succinate dehydrogenase inhibitors.

Suitable triazole derivatives may include propiconazole, difenconazole, tebuconazole, tetraconazole and triticonazole. Suitable strobilurins include trifloxystrobin, azoxystrobin, kresoxim-methyl, pyraclostrobin, and picoxystrobin. In other examples, suitable carbamates include thiram. Suitable substituted benzenes include PCNB and chlorothalonil. Suitable carboxamides include carboxin. Suitable phenylamides include metalaxyl; metalaxyl consisting of more than 70% by weight of the R-enantiomer; metalaxyl consisting of more than 85% by weight of the R-enantiomer; metalaxyl consisting of more than 92% by weight of the R-enantiomer; metalaxyl consisting of more than 97% by weight of the R-enantiomer; and mefenoxam (i.e., R-metalaxyl or metalaxyl-M). Suitable succinate dehydrogenase inhibitors include benzovindiflupyr.

Other suitable fungicidally-active compounds may include benomyl (also known as benlate), bitertanol, carbendazim, capropamid, cymoxanil, cyprodinil, ethirimol, fenpiclonil, fenpropimorph, fluquinconazole, flutolanil, flutriafol, fosetyl-aluminum, fuberidazole, guazatine, hymexanol, kasugamycin, imazalil, imibenconazole, iminoctadine-triacetate, ipconazole, iprodione, mancozeb, maneb, mepronil, metconazole, metiram, myclobutanil, nuarimol, oxadixyl, oxine-copper, oxolinic acid, pefurazoate, pencycuron, prochloraz, propamocarb hydrochloride, pyroquilon, silthiopham, tecnazene, thifluzamide, thiophenate-methyl, tolclofos-methyl, triadimenol, triazoxide and triflumizole.

In some embodiments, the fungicidally-active compound may include a combination of compounds. In one example, a mixture of fungicidally-active compounds includes fludioxonil and thiabendazole. In another example, a mixture of fungicidally-active compounds includes fludioxonil and azoxystrobin. In another example, a mixture of fungicidally-active compounds includes fludioxonil and propiconazole. In another example, a mixture of fungicidally-active compounds may include fludioxonil, mefenoxam and difenoconazole. In another example, a mixture of fungicidally-active compounds includes fludioxonil, mefenoxam, difenoconazole, and azoxystrobin.

It should also be clear that fungicidally active compounds include those compounds that are room temperature (25°C) solid and those compounds that are room temperature liquid.

The amount of fungicidally-active compound may vary from embodiment to embodiment. In typical embodiments, the fungicidally-active compound represents 1% to 20% by weight of the composition; 1% to 15% by weight of the composition; 1% to 10% by weight of the composition; and 1% to 5% by weight of the composition.

The compositions include propylene glycol methyl ether and optionally one or more further glycol ether solvent which may vary from example to example. In many examples, the ether solvent will have a boiling point in the range of 130°C to 200°C and a flash point in the range of 25°C to 100°C. In some examples, ether solvents will have a boiling point in the range of 130°C to 155°C and a flash point in the range of 25°C to 40°C.

Exemplary, propylene glycol methyl ether (e.g. 1-methoxy-2-propanol) is DOWANOL PM available from the Dow Chemical Company. Examples of further glycol ether solvents include Dowanol DPM, Methyl Carbitol, Butyl Carbitol, and Butyl Cellosolve all available from the Dow Chemical Company.

The amount of glycol ether solvent is 30% to 80% by weight of the composition; 40% to 80% by weight of the composition; 50% to 80% by weight of the composition; and 60% to 75% by weight of the composition. In many examples the ether solvent will represent 70% by weight of the composition.

The amount of filler may vary from 5% to 30% by weight of the treating composition; from 5% to 25% by weight of the treating composition; from 5% to 20% by weight of the treating composition; from 5% to 15% by weight of the treating composition; and from 8% to 12% by weight of the treating composition.

Certain composition embodiments as disclosed herein are particularly suitable for thermal fogging applications, and even more particularly, in many embodiments, as ready-to-fog (RTF) compositions for thermal fogging application. As used herein, RTF compositions include compositions that do not require at least one of: a dilution prior to thermal fogging or a combination of active ingredient (e.g. by melting, heating or otherwise) to a carrier prior to fogging. As such, in many examples, RTF compositions disclosed herein may be contained within a storage and shipping container, and ready for fogging upon opening the storage and shipping container.

Exemplary thermal fogging devices for application by thermal fogging include devices available from IGEBA, e.g the TF-35, and devices available from XEDA, e.g. the ELECTROFOG. Other thermal foggers include those manufactured by Igeba, Swingtec, and Electrogen, for example. Some may also prefer to build their own thermal fogger, using any combination of propane and electricity as a power supply. Fogging temperatures can range from 260°C (500°F) to 399°C (750°F). More typically, fogging temperatures will range from 288°C (550°F) to 385°C (725°F), and 316°C (600°F) to 371°C (700°F).

The compositions may be used to create a fog having a variety of particle sizes for uniform distribution during application of the active ingredient. In many embodiments, compositions contained herein were able to create a particle size that created unexpected performance. For example, compositions may create fog having a particle size volume median diameter (VMD) in the range of about two to about twenty microns. In many examples, compositions may create fog having a particle size VMD in the range of about three to about ten microns. Particle sizes achievable by the instant disclosure, particularly particle sizes of about five to about ten microns, allowed for excellent distribution of the active ingredient within a bin of post harvested crop. Uniform distribution of active ingredient even in a fully-loaded and stacked bin, including good distribution to the bottom and middle of bins, was achievable. Particle size VMD may be determined using a Sympatec HELOS laser diffraction sensor at approximately 1 meter from the exit of the fogger.

Somewhat similarly, compositions used herein can be fogged to create an application rate in at least one of the following ranges: 0.1 to 10 grams of ai per bin, 0.1 to 8 grams of ai per bin, 0.1 to 5 grams of ai per bin, 0.1 to 3 grams of ai per bin, and 0.25 to 1 gram of ai per bin. As used herein, per bin is also considered inclusive of 812.80+0.33 L (49,600+20 inches³) volume of post-harvest material because in some examples fogging may occur in the absence of an actual bin, e.g. when stored post-harvest material is stored in piles, such as sugar beets. In many examples, however, particularly pome fruit such as apples, the post-harvest material will be contained in bins. The bins may further include a plurality of ventilation slots in the sides and base to promote air flow. One exemplary bin includes the MacroBin 26 Series from Macro

Plastics, having approximately 812.80 L (49,600 inches³) of volume capacity. MacroBin 26 further includes approximately 600 ventilation slots, the slots having 4,45 cm x 0.79 cm (1,75" x 5/16") dimensions on the sides of the bin and 3.18 cm x 0.79 cm (1 1/4" x 5/16") dimensions in the base of the bin.

One of the functions of oleic acid filler is to increase the visibility of the composition upon fogging. Applicants believe increasing the visibility of the fogged composition may provide any number of benefits, including for example at least one of decreasing applicator exposure to a fogged composition or increasing contact of the fogged composition with post harvested crops. For example, compositions may be fogged to create a visibility when measured by obscuration of light in the range of at least one of 20 to 70% Copt; 25 to 65% Copt; 30 to 60% Copt; 35 to 55% Copt; and 40 to 50% Copt. Copt measurements may be taken using Sympatec HELOS laser diffraction sensor at approximately 1 meter from the exit of the fogger.

Compositions as disclosed herein may also include other inert additives. Such additives include thickeners, flow enhancers, wetting agents, antifoaming agents, biocides, buffers, lubricants, drift control agents, deposition enhancers, adjuvants, evaporation retardants, freeze protecting agents, stabilizing metal salts or hydroxides, UV protecting agents, fragrances, and the like.

Embodiments also include the methods of treating post-harvest fruits or vegetables, for example, by applying the compositions disclosed herein. As noted, preferred application methods will include application by thermal fogging, e.g. as described above.

Application methods may vary, however, including, for example, spraying, drenching, soaking, etc. In many examples, application methods will include fogging the composition.

In many embodiments, target crops to be protected may include any variety of fruit or vegetable. Exemplary post-harvest material includes apples, pears, plums, grapes, peaches, almonds, cherries, strawberries, raspberries, blackberries, bananas, spinach, lettuce, asparagus, cabbages, carrots, onions, tomatoes, potatoes, sugar beets, paprika, beans, lentils, peas, soybeans, marrows, cucumbers, melons, oranges, lemons, limes, grapefruit, mandarins, etc. It should be apparent that this listing does not represent any limitation of targeted crops.

The following examples illustrate the invention.

### Example 1: Preparation of Test Material

Test compositions were prepared by mixing ingredients as disclosed in Table 1 until a uniform mixture was obtained. FDL = fludioxonil. Concentrations are by weight % unless indicated otherwise.

| **Table 1** | | | | | |
|---|---|---|---|---|---|
| | Comp. 1 | Comp. 2 | REF Comp. 3 | Comp. 4 | REF Comp. 5 |
| Al | 10% FDL | 10% FDL | 10% FDL | 10% FDL | 15% FDL |
| Solvent | 80% Dowanol DPM | 80% Dowanol PM | 85% Dowanol DPM | 60% Dowanol DPM | 85% Dowanol DPM |
| Filler | 10% Oleic Acid | 10% Oleic Acid | 5% Oleic Acid | 30% Oleic Acid | na |

### Example 2: Phytotoxicity Test

Phytotoxicity tests for the test composition were performed to determine how damaging the test composition was to post-harvest material. Sprays were applied in a lab scale spray booth using 110015VK 0.15 GPM Teejet nozzle, 344,7 kPa, at 3,2 and 6,4 km/h (50 psi, at 2 and 4 mph) speeds. Organic Pome fruit (Gala, Fuji, and Red Delicious apples and Bartlett and Bosc pears) were sprayed with Composition 1 and Composition 2 above. The phytotoxicity was observed at 2 hours and then at 24 hours.

Damage levels, even at higher application rates (such as estimated to be 20X fogging application rates), were found to be within commercially acceptable ranges.

### Experiment 3: Fogging

Test composition 2 was fogged using an Igeba TF-35 thermal fogging unit (260-316°C (500-600 F), 10 second run time) and found to produce a dry, thick and visible fog having a volume median diameter (VMD) measurement of approximately 4 microns. Obscuration Data illustrating the filler's ability to produce an unexpected increase in fog visibility is illustrated in Table 2 below (results shown relative to a control composition (10% fludioxonil in Dowanol PM)).

| **Table 2** | | | | |
|---|---|---|---|---|
| | **% Optical Concentration (Obscuration)** | | | |
| **Formulation** | **Run 1** | **Run 2** | **Run 3** | **Average** |
| Comp. 2 | 44.87 | 27.46 | 24.35 | 32.22667 |
| Control | 12.39 | 8.85 | 5.29 | 8.843333 |

As seen, obscuration was significantly improved by use of the filler. VMD and Obscuration Data was obtained using a using Sympatec HELOS laser diffraction sensor at approximately 1 meter from the exit of the fogger (10 second run time).

### Experiment 4: Application Uniformity

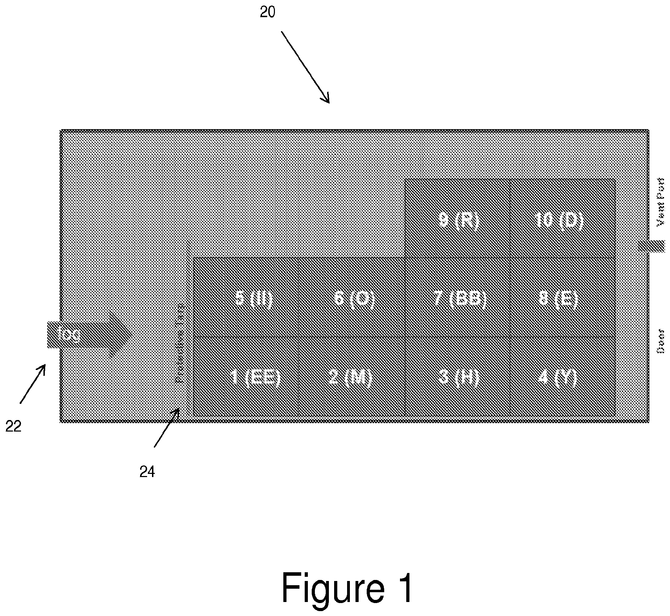

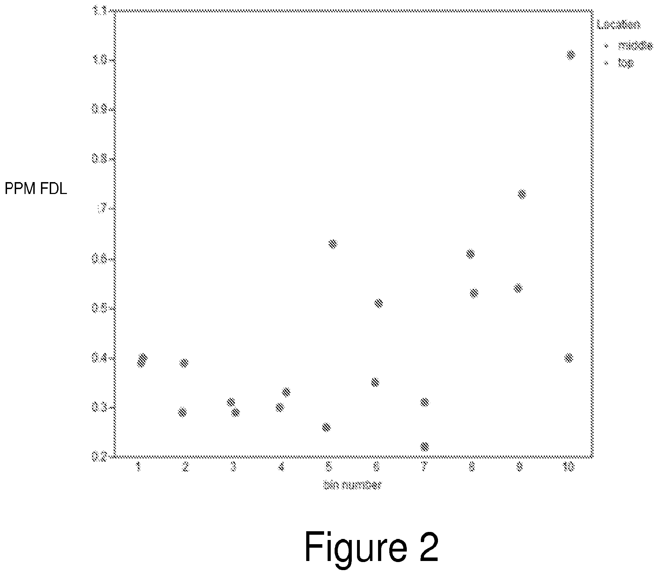

Figure 1 illustrates a side view of storage container 20 showing the bin configuration used for Experiment 4. Bins 1-10 were filled with pome (approximately 408 kg/bin (900 lbs/bin)) and stacked in the manner illustrated on the floor of the container. A protective tarp 24 was positioned to cover the sides of bins 1 and 5 proximal to fog portal 22. 124 mL of Composition 2 was fogged (using a Swingtec pulse jet fogger) through portal 22 at a rate of 100mL/min (rate based on 1 g of FDL/bin + 20% excess). Container 22 was sealed following application (2 hours with circulation fans off, then overnight with circulation fans on). Figure 2 illustrates residue data obtained from fruit located in the middle and on the top of each bin. As seen, using compositions and methods as disclosed herein, even fruit in the middle of covered bins, e.g. bin 2, was treated.

Using methods and systems as described herein, applicants believe the post-harvest treatment of crops, including fruits and vegetables, will be improved. In many embodiments contained herein, formulations disclosed will not be damaging to the post-harvest material. Further, Applicants believe that using methods and systems described herein will improve transport and storage of crops.

It is further noted that, as used in this application, the singular forms "a," "an," and "the" include plural referents unless expressly and unequivocally limited to one referent.

## Claims

1. A composition for the post-harvest treatment of crops, the composition comprising:
1% to 20%, by weight percent, of at least one fungicidally-active compound, wherein the at least one fungicidally active compound includes at least one compound chosen from fludioxonil, mefenoxam, metalaxyl, difenoconazole, propiconazole, thiabendazole, and azoxystrobin;
30% to 80%, by weight percent, of at least one glycol ether solvent wherein the at least one ether solvent includes propylene glycol methyl ether; and 5% to 30%, by weight percent, of at least one filler which is oleic acid.

2. The composition of claim 1, wherein the at least one glycol ether solvent has:
a boiling point in the range of 130°C to 200°C and
a flash point in the range of 25°C to 100°C.

3. A method of treating post-harvest crops, the method comprising:
applying to the post-harvest crops an effective amount of a composition according to claim 1 or 2.

4. The method of claim 3, wherein applying includes fogging the composition of claim 1 with a thermal fogger to create particles having a Volume Median Diameter (VMD) in the range of 3 to 10 microns.

5. The method of claim 4, wherein the composition is fogged at a temperature in the range of 288°C to 399°C (550 to 750°F).

6. The method of claim 3, wherein the composition is fogged from a ready-to-use formulation, without requiring a dilution step to create the particles having a VMD in the range of 3 to 10 microns.

## Patentansprüche

1. Zusammensetzung zur Behandlung von Kulturpflanzen nach der Ernte, wobei die Zusammensetzung Folgendes umfasst:
1 Gew.-% bis 20 Gew.-% mindestens einer fungizidwirksamen Verbindung, wobei die mindestens eine fungizidwirksame Verbindung mindestens eine Verbindung ausgewählt aus Fludioxonil, Mefenoxam, Metalaxyl, Difenoconazol, Propiconazol, Thiabendazol und Azoxystrobin umfasst,
30 Gew.-% bis 80 Gew.-% mindestens eines Glykoletherlösungsmittels, wobei
das mindestens eine Etherlösungsmittel Propylenglykolmethylether umfasst, und
5 Gew.-% bis 30 Gew.-% mindestens eines Füllstoffs, bei dem es sich um Ölsäure handelt.

2. Zusammensetzung nach Anspruch 1, wobei das mindestens eine Glykoletherlösungsm ittel:
einen Siedepunkt im Bereich von 130°C bis 200°C und
einen Flammpunkt um Bereich von 25°C bis 100°C aufweist.

3. Verfahren zur Behandlung von Kulturpflanzen nach der Ernte, wobei das Verfahren Folgendes umfasst:
das Ausbringen einer wirksamen Menge einer Zusammensetzung nach Anspruch 1 oder 2 auf die Kulturpflanzen nach der Ernte.

4. Verfahren nach Anspruch 3, wobei das Ausbringen das Vernebeln der Zusammensetzung nach Anspruch 1 mit einem thermischen Vernebelungsgerät unter Bildung von Partikeln mit einem Volumenmediandurchmesser (VMD) im Bereich von 3 bis 10 Mikron umfasst.

5. Verfahren nach Anspruch 4, wobei die Zusammensetzung bei einer Temperatur im Bereich von 288°C bis 399°C (550 bis 750°F) vernebelt wird.

6. Verfahren nach Anspruch 3, wobei die Zusammensetzung aus einer gebrauchsfertigen Formulierung vernebelt wird, ohne dass ein Verdünnungsschritt erforderlich ist, um die Partikel mit einem VMD im Bereich von 3 bis 10 Mikron zu bilden.

## Revendications

1. Composition pour le traitement après récolte de cultures, la composition comprenant :
1 % à 20 %, en pour cent en poids, d'au moins un composé actif de manière fongicide, l'au moins un composé actif de manière fongicide comprenant au moins un composé choisi parmi fludioxonil, méfénoxam, métalaxyl, difénoconazole, propiconazole, thiabendazole, et azoxystrobine ;
30 % à 80 %, en pour cent en poids, d'au moins un solvant de type éther de glycol, l'au moins un solvant de type éther comprenant de l'éther méthylique de propylèneglycol ; et
5 % à 30 %, en pour cent en poids, d'au moins une charge qui est l'acide oléique.

2. Composition selon la revendication 1, l'au moins un solvant de type éther de glycol possédant :
un point d'ébullition dans la plage de 130 °C à 200° et
un point éclair dans la plage de 25 °C à 100 °C.

3. Procédé de traitement de cultures après récolte, le procédé comprenant :
l'application aux cultures après récolte d'une quantité efficace d'une composition selon la revendication 1 ou 2.

4. Procédé selon la revendication 3, l'application comprenant la brumisation de la composition selon la revendication 1 avec un brumisateur thermique pour créer des particules d'un Diamètre Médian en Volume (DMV) dans la plage de 3 à 10 microns

5. Procédé selon la revendication 4, la composition étant brumisée à une température dans la plage de 288 °C à 399 °C (550 à 750 °F).

6. Procédé selon la revendication 3, la composition étant brumisée à partir d'une formulation prête à l'emploi, sans avoir recours à une étape de dilution pour créer les particules possédant un DMV dans la plage de 3 à 10 microns.
